# EUROPEAN PATENT APPLICATION

(11) **EP 4 549 377 A1**
(43) Date of publication of application: **07.05.2025**
(21) Application number: 24209702.0
(22) Date of filing: 30.10.2024
(51) Int. Cl.: C01B 17/22, C01B 17/24, C01B 17/36, C01D 15/02, H01M 10/54

(54) **METHOD OF PREPARING LITHIUM SULFIDE**

(30) Priority: 02.11.2023 KR 20230150033
(71) Applicant: SK Innovation Co., Ltd., Seoul 03188 (KR)
(72) Inventor: HONG, Suk Joon, 34124 Daejeon (KR); CHOI, Min June, 34124 Daejeon (KR); KIM, Ji Min, 34124 Daejeon (KR); CHOI, Wan Uk, 34124 Daejeon (KR); CHOI, Je Nam, 34124 Daejeon (KR)
(74) Representative: Thoma, Michael

(57) **Abstract**

In a method for preparing lithium sulfide, a solid sulfur layer and a lithium source layer are sequentially arranged in a reactor. A gas feed is injected into the reactor in a single direction to obtain a lithium sulfide-containing product. The lithium sulfide-containing product is dissolved in an anhydrous solvent to form a lithium sulfide-containing solution. Lithium sulfide is separated from the lithium sulfide-containing solution. The gas feed sequentially passes through the solid sulfur layer and the lithium source layer, such that high-purity lithium sulfide may be efficiently prepared.

## Description

### BACKGROUND OF THE INVENTION

### 1. Field of the Invention

Embodiments of the present disclosure relate to a method of preparing lithium sulfide. More particularly, the embodiments of the present disclosure relate to a method of preparing high-purity lithium sulfide.

### 2. Description of the Related Art

Recently, a secondary battery has been widely applied to portable electronic telecommunication devices such as a camcorder, a mobile phone, a laptop computer, etc., and vehicles such as a hybrid car, an electric car, etc., as a power source thereof. Among the secondary batteries, a lithium secondary battery has a high operating voltage and a high energy density per unit weight, and is advantageous in terms of a charging speed and light weight. In this regard, the lithium secondary battery has been actively developed and applied to various industrial fields.

Among the secondary batteries, an all-solid-state battery which uses a solid electrolyte does not include a flammable liquid electrolyte, thus it has high safety. In addition, energy density and life-span of the all-solid-state battery are higher than those of existing secondary batteries which use the liquid electrolyte. The all-solid-state battery has been actively studied in recent years due to its high energy density and long life-span characteristics.

A sulfide-based solid electrolyte has high lithium ion conductivity and safety over a wide voltage range. The sulfide-based solid electrolyte exists in the form of Li₂S-P₂S₅, Li₂S-P₂S₅-LiCl, etc., and is made from lithium sulfide.

However, lithium sulfide is not made from natural minerals, such that it should be produced by synthesis. In a synthesis process of the lithium sulfide, when using metallic lithium as a lithium source, there is a problem in terms of price, and when using lithium hydroxide, reaction efficiency may be reduced or a side reaction may occur. Further, hydrogen sulfide (H₂S) as a sulfur source is toxic so it is difficult to handle the same. Therefore, a process design for efficiently preparing high-purity lithium sulfide is required.

### SUMMARY

An embodiment of the present disclosure provides an efficient method of preparing high-purity lithium sulfide.

To achieve the above object, in a method of preparing lithium sulfide according to various embodiments, a solid sulfur layer and a lithium source layer are sequentially arranged in a reactor. A gas is injected into the reactor in a single direction to obtain a lithium sulfide-containing product. The lithium sulfide-containing product is dissolved in an anhydrous solvent to form a lithium sulfide-containing solution. Lithium sulfide is separated from the lithium sulfide-containing solution.

In some embodiments, the gas may be injected into one end of the reactor and may sequentially pass through the solid sulfur layer and the lithium source layer.

In some embodiments, the lithium source layer may include at least one of lithium hydroxide, lithium hydroxide hydrate, lithium oxide and lithium oxide hydrate.

In some embodiments, a lithium source included in the lithium source layer may be recovered from a waste cathode material of a lithium secondary battery.

In some embodiments, a ratio of the total mole number of lithium atoms included in the lithium source layer to the total mole number of sulfur atoms included in the solid sulfur layer may be 1 to 3.

In some embodiments, the gas may not include oxygen and moisture.

In some embodiments, the gas may include nitrogen, hydrogen or a nitrogen-hydrogen mixed gas.

In some embodiments, the gas may include the nitrogen-hydrogen mixed gas, and a volume ratio of nitrogen in the nitrogen-hydrogen mixed gas may be 30 to 100% by volume.

In some embodiments, a reaction temperature in the reactor may be 300 to 500°C.

In some embodiments, a reaction pressure in the reactor may be 0.1 to 5 bar.

In some embodiments, the anhydrous solvent may include a solvent having a moisture content of 0.5% or less.

In some embodiments, the anhydrous solvent may include at least one of anhydrous ethanol, acetone, ethyl acetate, dimethylsulfoxide and dimethylformamide.

In some embodiments, the process of separating lithium sulfide from the lithium sulfide-containing solution may include evaporating and removing the anhydrous solvent.

In some embodiments, the reactor may include a first reactor and a second reactor.

In some embodiments, the solid sulfur layer may be arranged in the first reactor, and the lithium source layer may be arranged in the second reactor, and the gas may be supplied from the first reactor to the second reactor to sequentially contact the solid sulfur layer and the lithium source layer.

According to the above-described embodiments, a solid sulfur layer and a lithium source layer are sequentially arranged in a reactor, and a gas is injected in a single direction to sequentially contact the layers, such that high-purity lithium sulfide may be prepared under mild conditions.

According to some embodiments, high-purity lithium sulfide may be obtained in an environmentally friendly manner at a low cost, by using a lithium source generated during treatment of a waste battery.

According to some embodiments, solid sulfur may be obtained from by-products generated after oil refining treatment, and thus lithium sulfide may be prepared in an environmentally friendly manner. In addition, since it is easy to control the solid sulfur, and a worker does not directly contact hazardous gases, lithium sulfide may be prepared efficiently.

According to various embodiments, lithium sulfide may be separated efficiently using an anhydrous solvent without a side reaction and with a shortened manufacturing time.

### BRIEF DESCRIPTION OF THE DRAWINGS

The above and other objects, features and other advantages of the embodiments of the present disclosure will be more clearly understood by the skilled person having ordinary skill in the art from the following detailed description taken in conjunction with the accompanying drawings, in which:
FIG. 1 is a schematic flowchart for describing a method of preparing lithium sulfide according to embodiments of the present disclosure;
FIG. 2 is a schematic process flow diagram for describing the method of preparing lithium sulfide according to embodiments of the present disclosure; and
FIG. 3 is a schematic process flow diagram illustrating the method of preparing lithium sulfide according to some embodiments of the present disclosure.

### DETAILED DESCRIPTION

According to an embodiment of the present disclosure a method is provided for preparing high purity lithium sulfide with high yield from solid sulfur and lithium sources.

Hereinafter, various embodiments of the present disclosure will be described in detail with reference to the accompanying drawings.

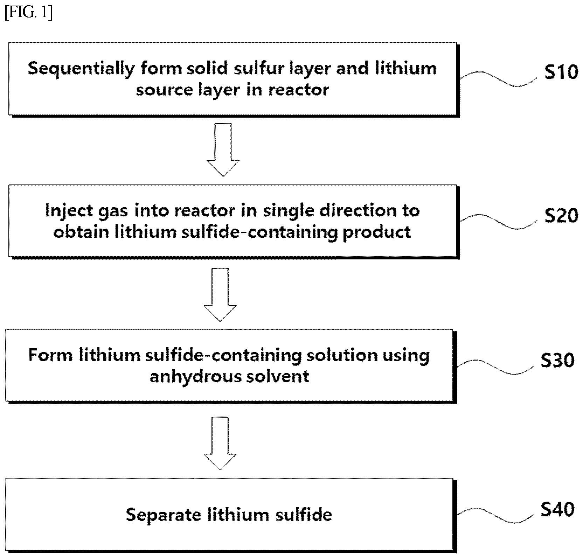

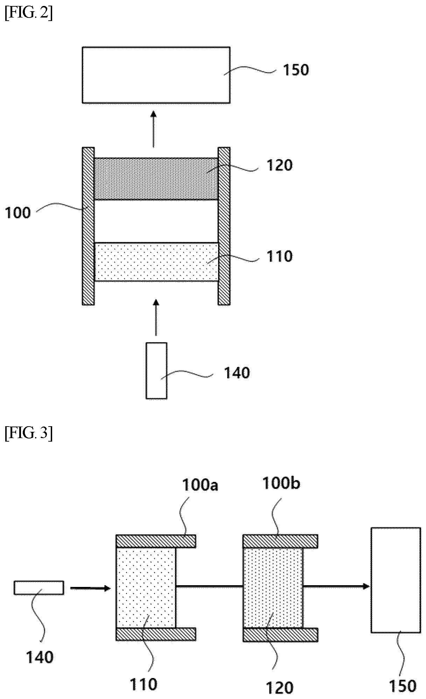

FIG. 1 is a schematic flowchart for describing a method of preparing lithium sulfide according to embodiments of the present disclosure. FIG. 2 is a schematic process flow diagram for describing the method of preparing lithium sulfide according to embodiments of the present disclosure.

Referring to FIG. 1, a solid sulfur layer and a lithium source layer may be formed sequentially inside a reactor (e.g., process S10).

Referring to FIG. 2, a reactor 100 includes a solid sulfur layer 110 and a lithium source layer 120. The reactor 100 may be disposed to face and be operatively coupled to a gas supply unit 140 and a product collection unit 150.

For example, as shown in FIG. 2, the solid sulfur layer 110 and the lithium source layer 120 may be sequentially arranged inside the reactor 100 so that a gas feed from the gas supply unit 140 may sequentially pass through the solid sulfur layer 110 and the lithium source layer 120. Based on this arrangement as illustrated in FIG. 2, the gas feed may pass through the solid sulfur supply 110 first and through the lithium source layer 120 second.

The form in which the solid sulfur layer 110 and the lithium source layer 120 are arranged is not particularly limited. For example, the solid sulfur layer 110 and the lithium source layer 120 may be arranged in separately divided spaces, or may be arranged in the same space in a state where they are divided by a separation membrane. For example, the solid sulfur layer 110 and the lithium source layer 120 may each contact the separation membrane and exist in a state where they are adj acent to each other without any space between them other than the separation membrane. In some embodiments, the solid sulfur layer 110 and the lithium source layer 120 may be in direct contact with each other without a separation membrane between them.

In some embodiments, the solid sulfur layer 110 and the lithium source layer 120 may exist in a spaced apart state from each other. When the respective layers exist with being spaced apart, a flow of gas may be generated, such that lithium sulfide may be efficiently prepared.

For example, the solid sulfur layer 110 and the lithium source layer 120 may be spaced apart to form an air layer or a bed layer of a material having no reactivity between the solid sulfur layer 110 and the lithium source layer 120. The air layer or the bed layer of a non-reactive material may facilitate the flow of gas and help the lithium source layer contact the gas.

For example, a reactive material layer may not be included between the solid sulfur layer 110 and the lithium source layer 120. When the reactive material layer is included therebetween, the products may be different, a generation of impurities may be increased, and a reaction time may be increased.

After the solid sulfur layer 110 and the lithium source layer 120 are sequentially arranged, the gas feed may be injected in a single direction from the gas supply unit 140 into one end of the reactor 100 in the single direction to collect a lithium sulfide-containing product from the other end of the reactor 100 (e.g., process S20).

In some embodiments, the gas is injected into one end of the reactor 100 and may sequentially pass through the solid sulfur layer 110 and the lithium source layer 120.

The gas may be injected in one direction to generate a unidirectional gas flow.

For example, when the gas is injected in both directions of the reactor 100 (e.g., in a direction from the solid sulfur layer to the lithium source layer and in a direction from the lithium source layer to the solid sulfur layer), the gas flow may not be generated or a residence time of the gas may be increased, such that high-purity lithium sulfide may not be prepared.

If the gas does not pass through the solid sulfur layer 110 and the lithium source layer 120 sequentially, lithium sulfide may not be prepared, or the purity of the produced lithium sulfide may be significantly reduced.

For example, when the lithium source layer 120 and the solid sulfur layer 110 are arranged in this order and the gas passes through these layers in the above order, a reaction may not occur, such that lithium sulfide may not be prepared.

For example, the other end of the reactor 100 may be connected integrally with the reactor 100 or may exist in a separate state. For example, the other end may be connected to the reactor 100 through a pipe in a separate space. Alternatively, the other end may exist in a merged state by being connected to the reactor.

The other end may include, for example, the product collection unit 150. The product collection unit 150 may be positioned on a side opposite to the gas supply unit 140, with the solid sulfur layer 110 and the lithium source layer 120 arranged in the reactor 100 interposed therebetween.

In some embodiments, the product collection unit 150 may be positioned on the side opposite to the gas supply unit 140. The gas may sequentially pass through the solid sulfur layer 110 and the lithium source layer 120 to form a lithium sulfide-containing product through gas phase synthesis. The lithium sulfide-containing product may be obtained from the product collection unit 150.

The lithium sulfide-containing product may be dissolved in an anhydrous solvent. The lithium sulfide-containing product may be dissolved in the anhydrous solvent to form a lithium sulfide-containing solution (e.g., process S30).

For example, the lithium sulfide-containing solution may include 20% by weight (wt %) or more of lithium sulfide based on a total weight.

In some embodiments, the lithium sulfide-containing solution may include 30 wt % or more of lithium sulfide based on the total weight. The content of lithium sulfide contained in the solution may vary partially depending on reaction conditions.

The lithium sulfide dissolved in the anhydrous solvent may be separated from the anhydrous solvent (e.g., process S40).

For example, the lithium sulfide may be separated by evaporating the anhydrous solvent used in forming the lithium sulfide-containing solution.

In various embodiments, the lithium sulfide remaining after separating the anhydrous solvent may have a purity of 95% or more. For example, the purity of the lithium sulfide remaining after evaporation of the anhydrous solvent may be 97% or more, 98% or more, 99% or more, 99.5% or more, 99.8% or more, or 99.9% or more. The purity may be measured by a XRD Rietveld refinement method.

In some embodiments, the solid sulfur layer 110 may be arranged inside the reactor 100 so that the gas first passes through the solid sulfur layer 110. For the solid sulfur included in the solid sulfur layer 110, any form of solid sulfur may be used regardless of the shape, particle size, particle distribution, etc.

The solid sulfur may use, for example, a material produced in a desulfurization process of petroleum, crude oil, etc. For example, the desulfurization process may include wet desulfurization for physically absorbing and treating a sulfur compound through sodium hydroxide, polyethylene glycol, potassium carbonate, ferrous chloride, etc.; dry desulfurization for chemically absorbing a sulfur compound through an adsorbent such as silica gel; and biological desulfurization using sulfur oxidizing bacteria such as Thiobacillus, etc.

By using the solid sulfur as a by-product generated in the desulfurization process, lithium sulfide may be prepared in an environmentally friendly manner at a low cost. In addition, since the solid state sulfur is easy to control, it may be sequentially arranged in the reactor, and a generation of hazardous gases may be reduced in the process of preparing lithium sulfide.

In some embodiments, the lithium source may include at least one of lithium hydroxide, lithium hydroxide hydrate, lithium oxide and lithium oxide hydrate.

In one embodiment, the lithium source may include lithium hydroxide hydrate or lithium oxide hydrate.

The lithium hydroxide, lithium hydroxide hydrate, lithium oxide or lithium oxide hydrate may each exist separately, or may exist in a mixed state within the lithium source layer 120. For example, a powder of lithium hydroxide, lithium hydroxide hydrate, lithium oxide or lithium oxide hydrate may be used. When including the lithium hydroxide, lithium hydroxide hydrate, lithium oxide, lithium oxide hydrate or a combination thereof in the form of powder, particles may have an average particle diameter of 2 mm or less.

The lithium source may include at least one of lithium hydroxide hydrate or lithium oxide hydrate to promote preparation of lithium sulfide without inputting additional reactants.

In various embodiments, the lithium source included in the lithium source layer 120 may use a lithium source recovered from a waste cathode material.

For example, the lithium source may be obtained by preparing a waste cathode active material mixture from the waste cathode material, reacting the waste cathode active material mixture with a gas to form a preliminary precursor mixture, and then selectively recovering a lithium precursor from the preliminary precursor mixture.

For example, the waste cathode material includes a cathode current collector (e.g., aluminum (Al)) and a cathode active material layer, and the cathode active material layer may include the cathode active material, a conductive material and a binder.

The conductive material may include a carbon-based material such as, for example, graphite, carbon black, graphene, carbon nanotubes, etc. The binder may include a resin material such as vinylidene fluoride-hexafluoropropylene copolymer (PVDF-co-HFP), polyvinylidene fluoride (PVDF), polyacrylonitrile, polymethylmethacrylate, etc.

For example, the waste cathode active material mixture may be produced through pulverization. For example, the waste cathode active material mixture may be subjected to heat treatment, and impurities included in the waste cathode active material mixture may be removed or reduced through the heat treatment. Accordingly, the purity of the preliminary precursor mixture may be improved, and the purity of the recovered lithium precursor may also be improved.

For example, the gas reacting with the waste cathode active material mixture may be a reducing gas. The preliminary precursor mixture prepared by reacting with the waste cathode active material mixture may include, for example, lithium hydroxide, lithium oxide, transition metal or transition metal oxide.

The preliminary precursor mixture may be washed with water to recover the lithium precursor, and the lithium precursor may be separated from transition metals and recovered through the water washing treatment. The lithium precursor may include lithium hydroxide or a hydrate thereof

The recovered lithium precursor may be crystallized through a dry process or the like.

Since the material recovered from the waste cathode material may be used as the lithium source, lithium sulfide may be prepared in an environmentally friendly manner.

The reactor 100 may include any suitable reactor which allows injecting a gas into the reactor in one direction. For example, the reactor 100 may include a tubular reactor, a tower reactor, a stirred tank reactor, a fluidized bed reactor and the like.

In various embodiments, the reactor 100 may include the fluidized bed reactor. In some embodiments, the reactor may have a body whose diameter increases stepwise or gradually from a lower portion thereof in order to enhance mixing of the gas and solid and improve the reaction yield.

For example, when using the fluidized bed reactor as the reactor 100 used in the process of preparing lithium sulfide, the lithium source may be recovered from the waste cathode material, and lithium sulfide may be prepared in the same reactor. Accordingly, the manufacturing efficiency of lithium sulfide may be improved.

In addition, when using the fluidized bed reactor, the product collection unit 150 may exist in a state merged with the fluidized bed reactor, and the diameter of the reactor may increase gradually at a constant inclination angle from the gas supply unit 140 toward the product collection unit 150. According to the changes in the diameter, the fluidization efficiency may be improved, such that the yield of lithium sulfide may be enhanced.

In various embodiments, a ratio of the total mole number of lithium atoms included in the lithium source layer 120 to the total mole number of sulfur atoms included in the solid sulfur layer 110 may be 1 to 3.

In some embodiments, the ratio of the total mole number of lithium atoms included in the lithium source layer 120 to the total mole number of sulfur atoms included in the solid sulfur layer 110 may be 1.2 to 2.8, 1.4 to 2.6, or 1.5 to 2.5. Since the mole ratio of the lithium atoms to the sulfur atoms is within the above range, lithium sulfide may be prepared.

The gas injected into the reactor may include, for example, an inert gas such as hydrogen, a nitrogen-hydrogen mixed gas, argon, nitrogen, helium and the like.

In some embodiments, the gas may not include oxygen or moisture. Accordingly, the generation of impurities may be reduced.

In some embodiments, the gas may include nitrogen, hydrogen, or a nitrogen-hydrogen mixed gas. For example, the gas may include nitrogen, hydrogen, nitrogen-hydrogen, nitrogen-argon gas, hydrogen-argon gas and the like.

In some embodiments, the gas includes the nitrogen-hydrogen mixed gas, and a volume ratio of nitrogen in the nitrogen-hydrogen mixed gas may be 30 to 100% by volume (vol %).

In some embodiments, a temperature in the operation of injecting the gas to obtain a lithium sulfide-containing product may be 300 to 500°C. In some embodiments, the temperature may be 300 to 450°C.

When the temperature is less than 300°C, even if the gas and solid sulfur come into contact, the reaction may not be activated or the activation level may be low to cause a reduction in the yield of lithium sulfide, and a side reaction may occur to cause a reduction in the purity of lithium sulfide. If the temperature exceeds 500°C, a constant flow rate of the gas cannot be maintained to cause a reduction in the yield of lithium sulfide, and the manufactured lithium sulfide may solidify to cause a reduction in the yield.

In some embodiments, a pressure in the operation of injecting the gas to obtain a lithium sulfide-containing product may be 0.1 to 5 bar.

The pressure may be maintained at a pressure similar to atmospheric pressure or slightly higher than the atmospheric pressure depending on an amount of the gas to be injected. In some embodiments, the pressure may be 0.5 to 4 bar, or 1 to 3 bar. Within the above pressure range, lithium sulfide may be prepared with high purity.

In some embodiments, a reaction time in the operation of injecting the gas to obtain a lithium sulfide-containing product may be less than 5 hours.

In some embodiments, the reaction time in the operation of injecting the gas to obtain a lithium sulfide-containing product may be 0.5 to 4 hours, or 1 to 4 hours. The reaction time may be reduced by injecting the gas in a single direction, such that lithium sulfide may be efficiently prepared. The reaction time may be partially adjusted depending on the reaction temperature, but the reaction time may be regulated within the above range.

For example, if the reaction time is increased, a sulfur compound other than the lithium sulfide may be prepared.

The lithium sulfide-containing product may include some impurities other than the lithium sulfide.

As the anhydrous solvent, a solvent that can dissolve the lithium sulfide may be used, and thereby impurities which are not soluble in the anhydrous solvent may be removed. For example, among the compounds generated after the reaction, compounds which are not soluble in the anhydrous solvent may remain in a filter, and the remaining compounds may be separated and removed.

In some embodiments, the anhydrous solvent may include a solvent having a moisture content of 0.5% or less.

For example, the anhydrous solvent may include anhydrous ethanol, acetone, ether, dimethylformamide, dimethylacetamide, acetonitrile, dichloromethane, diethylamine, dimethylsulfoxide, hexane, cyclohexane, ethyl acetate, isopropyl alcohol, toluene, N-methyl caprolactam, N-methylpyrrolidone and the like.

In some embodiments, the anhydrous solvent may include at least one of anhydrous ethanol, acetone, ethyl acetate, dimethylsulfoxide and dimethylformamide.

In some embodiments, lithium sulfide may be separated from the lithium sulfide-containing solution by evaporating the anhydrous solvent.

For example, the lithium sulfide may be purified and separated without a side reaction by dissolving lithium sulfide in an anhydrous solvent and evaporating and removing the anhydrous solvent. For example, if the anhydrous solvent is not used, lithium sulfide may react with moisture contained in the solvent again to generate sulfate, and thereby the purity and yield of lithium sulfide may be decreased.

FIG. 3 is a schematic process flow diagram illustrating the method of preparing lithium sulfide according to some embodiments of the present disclosure.

Referring to FIG. 3, the reactor 100 may include a first reactor 100a and a second reactor 100b.

The first reactor 100a and the second reactor 100b may be the same as or different from each other, and may be the same as the above-described reactor.

The first reactor 100a may be operatively connected with the gas supply unit 140, and the second reactor 100b may be operatively connected with the product collection unit 150. The first reactor 100a and the second reactor 100b may be operatively connected to each other.

A method of connecting the first reactor 100a and the second reactor 100b is not particularly limited, and may include any connection method within a range where the gas, reactants, etc. are not leaked, and thereby do not cause a change in the reaction.

The first reactor 100a and the second reactor 100b are operatively connected to each other so that the gas fed to the first reactor 100a may be supplied to the second reactor 100b.

The first reactor 100a and the second reactor 100b may be arranged in the same direction. The gas feed may be supplied to the first reactor 100a in a single direction through the gas supply unit 140. The gas may be supplied in a direction toward the second reactor 100b connected with the first reactor 100a to form a unidirectional gas flow from the first reactor 100a to the second reactor 100b.

In some embodiments, the solid sulfur layer 110 may be arranged in the first reactor 100a, and the lithium source layer 120 may be arranged in the second reactor 100b.

For example, the solid sulfur layer 110 in the first reactor 100a and the lithium source layer 120 in the second reactor 100b may be adjacent to each other depending on their positions inside the reactor. Alternatively, the solid sulfur layer 110 in the first reactor 100a and the lithium source layer 120 in the second reactor 100b may be arranged in a spaced apart state from each other at a predetermined distance or more.

After each layer is arranged, a gas may be supplied to sequentially come contact the solid sulfur layer 110 and the lithium source layer 120.

Even though the solid sulfur layer 110 and the lithium source layer 120 exist in the physically separated reactors, lithium sulfide may be efficiently prepared by the unidirectional gas flow.

In some embodiments, the lithium sulfide-containing product as described above may be obtained from the product collection unit 150. The obtained product is dissolved in the anhydrous solvent to form a lithium sulfide-containing solution as described above.

In some embodiments, no solvent may be used in the arrangement of the solid sulfur layer 110 and the lithium source layer 120. For example, the solid sulfur layer 110 and the lithium source layer 120 may not include a solvent, and the anhydrous solvent may be used in the lithium sulfide-containing product of the product collection unit 150.

The solid sulfur layer 110 and the lithium source layer 120 do not include an organic solvent in the manufacturing process, and the anhydrous solvent used in the product collection unit 150 may be removed by evaporation, such that lithium sulfide may be prepared in an environmentally friendly manner.

The embodiments of the present disclosure described above include the following aspects, and can be implemented through at least one of the following aspects.

According to the first aspect of a method of preparing lithium sulfide, a solid sulfur layer and a lithium source layer is sequentially arranged in a reactor. A gas is injected into the reactor in a single direction to obtain a lithium sulfide-containing product. The lithium sulfide-containing product is dissolved in an anhydrous solvent to form a lithium sulfide-containing solution. Lithium sulfide is separated from the lithium sulfide-containing solution.

In the first aspect, according to the second aspect of the method of preparing lithium sulfide, the gas may be injected into one end of the reactor and may sequentially pass through the solid sulfur layer first and the lithium source layer second.

In the first or the second aspect, according to the third aspect of the method of preparing lithium sulfide, the lithium source layer may include at least one of lithium hydroxide, lithium hydroxide hydrate, lithium oxide and lithium oxide hydrate.

In the third aspect, according to the fourth aspect of the method of preparing lithium sulfide, a lithium source included in the lithium source layer may be recovered from a waste cathode material of a lithium secondary battery.

In anyone of the first aspect to the fourth aspect, according to the fifth aspect of the method of preparing lithium sulfide, a ratio of the total mole number of lithium atoms included in the lithium source layer to the total mole number of sulfur atoms included in the solid sulfur layer may be 1 to 3.

In anyone of the first aspect to the fifth aspect, according to the sixth aspect of the method of preparing lithium sulfide, the gas may not include oxygen and moisture.

In anyone of the first aspect to the sixth aspect, according to the seventh aspect of the method of preparing lithium sulfide, the gas may include nitrogen, hydrogen or a nitrogen-hydrogen mixed gas.

In the seventh aspect, according to the eighth aspect of the method of preparing lithium sulfide, the gas may include the nitrogen-hydrogen mixed gas, and a volume ratio of nitrogen in the nitrogen-hydrogen mixed gas may be 30 to 100% by volume.

In anyone of the first aspect to the eighth aspect, according to the ninth aspect of the method of preparing lithium sulfide, a reaction temperature in the reactor may be 300 to 500°C.

In anyone of the first aspect to the ninth aspect, according to the tenth aspect of the method of preparing lithium sulfide, a reaction pressure in the reactor may be 0.1 to 5 bar.

In anyone of the first aspect to the tenth aspect, according to the eleventh aspect of the method of preparing lithium sulfide, the anhydrous solvent may include a solvent having a moisture content of 0.5% or less.

In anyone of the first aspect to the eleventh aspect, according to the twelfth aspect of the method of preparing lithium sulfide, the anhydrous solvent may include at least one of anhydrous ethanol, acetone, ethyl acetate, dimethylsulfoxide and dimethylformamide.

In anyone of the first aspect to the twelfth aspect, according to the thirteenth aspect of the method of preparing lithium sulfide, the process of separating lithium sulfide from the lithium sulfide-containing solution may include evaporating and removing the anhydrous solvent.

In anyone of the first aspect to the thirteenth aspect, according to the fourteenth aspect of the method of preparing lithium sulfide, the reactor may include a first reactor and a second reactor.

In the fourteenth aspect, according to the fifteenth aspect of the method of preparing lithium sulfide, the solid sulfur layer may be arranged in the first reactor, and the lithium source layer may be arranged in the second reactor, and the gas may be supplied from the first reactor to the second reactor to sequentially contact the solid sulfur layer and the lithium source layer.

Hereinafter, specific experimental examples are proposed to facilitate understanding of the embodiments of the present disclosure.

### Example 1

Solid sulfur and lithium hydroxide monohydrate (LiOH·H₂O) were sequentially filled into a reactor. Nitrogen gas (100 vol %) was injected to come contact the solid sulfur layer and lithium hydroxide layer in this order inside the reactor. While injecting the nitrogen gas, the reaction pressure was maintained at 2 bar and the reaction temperature was maintained at 400°C. The reaction was performed for 1 hour. The reactor was moved to a glove box, and the product positioned at an upper portion thereof was dissolved in anhydrous ethanol, followed by separation and removal of any materials which were not dissolved in the anhydrous ethanol. Thereafter, the anhydrous ethanol was evaporated to obtain lithium sulfide.

### Example 2

A reaction was performed in the same process as in Example 1, except that the reaction temperature was set to 350°C.

### Example 3

A reaction was performed in the same process as in Example 1, except that the reaction temperature was set to 300°C.

### Example 4

A reaction was performed in the same process as in Example 1, except that a mixed gas of nitrogen (50 vol %)/hydrogen (50 vol %) was used.

### Comparative Example 1

A reaction was performed in the same process as Example 1 except for changing in a way that lithium hydroxide and solid sulfur were filled inside the reactor in this order so that the gas contact the lithium hydroxide layer and the solid sulfur layer in the above order.

### Comparative Example 2

A reaction was performed in the same process as Example 1, except that the reaction temperature was set to 120°C.

### Comparative Example 3

A reaction was performed in the same process as Example 1, except that the reaction temperature was set to 250°C.

### Comparative Example 4

A reaction was performed in the same process as Example 1, except that the reaction temperature was set to 600°C.

### Comparative Example 5

A reaction was performed in the same process as in Example 1, except that the product was not dissolved in anhydrous ethanol and the subsequent steps were not performed.

### Experimental Example

X-ray diffraction (XRD) was performed to measure the products obtained in the above-described examples and comparative examples, and crystal structures thereof were analyzed by Rietveld refinement.

Analysis results are shown in Table 1 below.

**TABLE 1**

| Item | Content in the product after separation and purification (%) | | | Recovery rate after separation and purification (%) | Note |
|---|---|---|---|---|---|
| | Lithium sulfide (Li₂S) | Lithium hydroxide (LiOH) | Other sulfates | | |
| Example 1 | 100 | - | - | 64% | |
| Example 2 | 100 | - | - | 46% | |
| Example 3 | 100 | - | - | 32% | |
| Example 4 | 100 | - | - | 64% | |
| Comparative Example 1 | (No reaction occurred) | | | - | |
| Comparative Example 2 | 17 | 83 | - | 98% | |
| Comparative Example 3 | 51 | 49 | - | 97% | |
| Comparative Example 4 | 90.4 | 9.6 | - | 11% | It is difficult to recover the product due to lithium sulfide solidified |
| Comparative Example 5 | 64 | - | 36 | 99% | Separation or purification is not performed |

Referring to Table 1, the products prepared by contact of the gas with the solid sulfur layer and the lithium hydroxide layer in this order according to the examples were dissolved in anhydrous ethanol, and then separated. Therefore, high-purity lithium sulfide was obtained with high efficiency. In addition, high-purity lithium sulfide was obtained in the reaction temperature range of 300 to 450°C according to the examples.

In Comparative Example 1, where the gas came into contact with the lithium hydroxide layer first and then with the solid sulfur layer no reaction occurred.

In Comparative Example 2, where the reaction temperature was low, it was shown that most of the products were dissolved in the anhydrous ethanol, and the recovery rate after separation and purification was high. However, since the reaction for preparing lithium sulfide hardly occurred, the content of lithium sulfide was confirmed to be less than 20%.

In Comparative Example 3 corresponding to the case, where the reaction temperature was less than 300°C even though the reaction temperature was increased compared to Comparative Example 2, it was shown that most of the products were dissolved in the anhydrous ethanol, and the recovery rate after separation and purification was high, but the content of lithium sulfide was less than 60%.

In Comparative Example 4, where the reaction temperature was high, the content of lithium sulfide was 90% or more, but lithium sulfide solidified in the product collection unit, thereby resulting in loss during the process of recovering lithium sulfide. In addition, it was confirmed that some lithium hydroxide did not react and remained because the reaction temperature was high.

In Comparative Example 5, where the separation or purification was not performed, a number of sulfates were included other than the lithium sulfide, and the purity of the lithium sulfide was low.

### Description of Reference Numerals

100: Reactor
100a: First reactor
100b: Second reactor
110: Solid sulfur layer
120: Lithium source layer
140: Gas supply unit
150: Product collection unit

## Claims

1. A method of preparing lithium sulfide, the method comprising:
sequentially arranging a solid sulfur layer and a lithium source layer in a reactor,
injecting a gas into the reactor in a single direction to obtain a lithium sulfide-containing product;
dissolving the lithium sulfide-containing product in an anhydrous solvent to form a lithium sulfide-containing solution; and
separating lithium sulfide from the lithium sulfide-containing solution.

2. The method for preparing lithium sulfide according to claim 1, wherein the gas is injected into one end of the reactor and sequentially passes through the solid sulfur layer first and the lithium source layer second.

3. The method for preparing lithium sulfide according to anyone of the preceding claims, wherein the lithium source layer comprises at least one of lithium hydroxide, lithium hydroxide hydrate, lithium oxide and lithium oxide hydrate.

4. The method for preparing lithium sulfide according to claim 3, wherein a lithium source included in the lithium source layer is recovered from a waste cathode material of a lithium secondary battery.

5. The method for preparing lithium sulfide according to anyone of the preceding claims, wherein a ratio of the total mole number of lithium atoms included in the lithium source layer to the total mole number of sulfur atoms included in the solid sulfur layer is 1 to 3.

6. The method for preparing lithium sulfide according to anyone of the preceding claims, wherein the gas does not include oxygen and moisture.

7. The method for preparing lithium sulfide according to anyone of the preceding claims, wherein the gas includes nitrogen, hydrogen or a nitrogen-hydrogen mixed gas.

8. The method for preparing lithium sulfide according to claim 7, wherein the gas includes the nitrogen-hydrogen mixed gas, and a volume ratio of nitrogen in the nitrogen-hydrogen mixed gas is 30 to 100% by volume.

9. The method for preparing lithium sulfide according to anyone of the preceding claims, wherein a reaction temperature in the reactor is 300 to 500°C.

10. The method for preparing lithium sulfide according to anyone of the preceding claims, wherein a reaction pressure in the reactor is 0.1 to 5 bar.

11. The method for preparing lithium sulfide according to anyone of the preceding claims, wherein the anhydrous solvent includes a solvent having a moisture content of 0.5% or less.

12. The method for preparing lithium sulfide according to anyone of the preceding claims, wherein the anhydrous solvent includes at least one of anhydrous ethanol, acetone, ethyl acetate, dimethylsulfoxide and dimethylformamide.

13. The method for preparing lithium sulfide according to anyone of the preceding claims, wherein the process of separating lithium sulfide from the lithium sulfide-containing solution comprises evaporating and removing the anhydrous solvent.

14. The method for preparing lithium sulfide according to anyone of the preceding claims, wherein the reactor comprises a first reactor and a second reactor.

15. The method for preparing lithium sulfide according to claim 14, wherein the solid sulfur layer is arranged in the first reactor, and the lithium source layer is arranged in the second reactor, and
the gas is supplied from the first reactor to the second reactor to sequentially contact the solid sulfur layer and the lithium source layer.
